# EUROPÄISCHE PATENTSCHRIFT

(11) **EP 1 236 976 B1**
(45) Veröffentlichungstag und Bekanntmachung des Hinweises auf die Patenterteilung: **13.07.2016**
(21) Anmeldenummer: 02004527.4
(22) Anmeldetag: 27.02.2002
(51) Int. Cl.: G01F 11/02

(54) **Dosiergerät zum Abgeben von Flüssigkeitvolumina**
Dosing device for delivering liquid volumes
Dispositif de dosage de volumes de liquide

(30) Priorität: 28.02.2001 DE 20103426 U
(43) Veröffentlichungstag der Anmeldung: 04.09.2002
(73) Patentinhaber: BRAND GMBH + CO KG, 97877 Wertheim (DE)
(72) Erfinder: Böhm, Dieter, D-36391 Sinntal-Sterbfritz (DE); Dorant, Udo, D-97877 Wertheim (DE); Ertl, Michael, D-97877 Wertheim (DE); Feldmann, Rainer, D-97222 Rimpar (DE); Krank, Peter, D-97877 Wertheim (DE); Pfohl, Josef, D-97900 Külsheim (DE)
(74) Vertreter: Von Rohr Patentanwälte Partnerschaft mbB

(56) Entgegenhaltungen:
- DE-A- 2 343 687
- DE-A- 19 536 258
- FR-E- 45 955
- GB-A- 711 879
- US-A- 4 072 247

## Beschreibung

Die Erfindung betrifft ein Dosiergerät zum Abgeben eines voreingestellten Flüssigkeitsvolumens aus einem Behälter mit den Merkmalen des Oberbegriffs von Anspruch 1, von Anspruch 8 oder von Anspruch 12.

Das bekannte Dosiergerät, von dem die Erfindung ausgeht (DE-A-23 43 687), ist ein Flaschendispenser zur Abgabe von Flüssigkeiten mit einem Glaszylinder, in dem ein verstellbarer Kolben zum Ansaugen einer einstellbaren Flüssigkeitsmenge gleitet, sowie einem Ventilkopf mit darin angeordnet je einem Ansaug- und Abgabesperrventil, die - auch mit dem Glaszylinder - in Fluidverbindung stehen. Diese Ventile sind in Fluidverbindung zwischen einem Behältnis und einer Abgabeöffnung so angeordnet, dass sie in Abgaberichtung öffnen und in umgekehrter Richtung den Fluidstrom versperren. Vom Ansaugsperrventil stromaufwärts führend ist eine Ansaugleitung in Form eines Rohres oder Schlauches angeschlossen, die sich im allgemeinen bis nahe dem Behälterboden erstreckt. Dem Abgabesperrventil folgt stromabwärts ebenso ein meist abgewinkeltes Rohrstück, eine Ausstoßkanüle, die mit dem Flüssigkeitsauslass endet. Der Kolben dieses Dispensers ist mit einem Überzug, vorzugsweise aus PTFE, versehen und mit geringem Spalt zwischen der Zylinderinnenwand und Kolbenaußenfläche in dem Zylinder leicht verschiebbar geführt.

Wird der Kolben aus dem Zylinder gezogen, so öffnet das Ansaugsperrventil und die Flüssigkeit strömt über die Ansaugleitung vom Behälter in den expandierenden Verdrängerraum. Der hochgezogene Kolben mit seinem Eigengewicht verbleibt in der Lage, da der Ventilkörper des Abgabesperrventils mit einer Ventilfeder gegen den Ventilsitz gedrängt wird. Wird der Kolben niedergedrückt, so öffnet das Abgabesperrventil aufgrund des Flüssigkeitsdruckes, und die Flüssigkeit strömt aus dem Verdrängerraum durch das Abgabesperrventil und die Ausstoßkanüle aus dem Flüssigkeitsauslass.

Der einstellbare Saughub wird durch einen starr am Zylinder befestigten Anschlagring und ein am Kolben verstell- und arretierbares Anschlagsegment begrenzt.

Flaschendispenser dieser Art werden vorliegend von Hand betätigt und sind bei bestimmungsgemäßem Gebrauch ein genaues Volumenmessgerät. Durch die dichtungslose und somit leichtgängige Kolben-Zylinder-Anordnung können allerdings dann Probleme auftreten, wenn der Kolben mit erhöhter Hubgeschwindigkeit gegen den jeweiligen Anschlag gefahren wird. Dies kann insbesondere dann geschehen, wenn das verstellbare Flüssigkeitsvolumen verringert bzw. der Saughub verkürzt wird.

Die Verfahrbewegung des Kolbens bewirkt eine Flüssigkeitsströmung in den Leitungen der Fluidverbindung und der Ansaugleitung bzw. der Ausstoßkanüle. Durch das abrupte Abstoppen des Kolbenhubes entsteht aufgrund der Strömungsenergie ein Druckanstieg, der dazu führen kann, dass beide Sperrventile öffnen und eine unbestimmte Flüssigkeitsmenge abgegeben wird.

Es bestünde die Möglichkeit, statt Sperrventilen Wegeventile einzusetzen, um die Leitungsverbindung entweder vom Verdrängerraum zur Ansaugleitung oder zur Abgabeleitung zu erreichen. Ein derartiger Aufbau hätte aber die Nachteile, dass die Stellungen des Wegeventils geschaltet werden müssten, dadurch Bedienfehler auftreten könnten und bei Handbetätigung ein Umgreifen an das jeweilige Bedienteil erforderlich wäre, da zum einen bei der Betätigung des Kolbens und zum anderen bei dem Halten eines Aufnahmegefäßes unter den Flüssigkeitsauslaß je eine Hand des Bedieners benötigt wird.

Eine weitere Möglichkeit bestünde darin, die Strömungsverhältnisse in der Ansaug- und/oder Abgabeleitung in Form ihres Querschnitts in Relation zum Kolbenquerschnitt vorzugeben. Je größer der Querschnitt ist, desto geringer wird die Strömungsgeschwindigkeit und folglich auch die Strömungsenergie. Jedoch wurde festgestellt, dass die Volumengenauigkeit negativ beeinflusst wird und die Entlüftung beim erstmaligen Befüllen schwieriger durchführbar bzw. wegen nicht herausspülbarer Luftblasen unvollständiger wird.

Es besteht auch die Möglichkeit, für den Kolben vor dem Anfahren auf den Anschlag ein Abbremsen einzurichten. Jedoch hängt der Erfolg einer vollständigen Entlüftung ebenso von der leichtgängigen Anfahrt in der eintauchenden Bewegungsrichtung auf den Kolbenanschlag ab. Auch wirken sich die zusätzlichen und ungleichmäßigen Kräfte nachteilig auf den Bedienkomfort aus.

Ein Dosiergerät mit Ansaugsperrventil und Abgabesperrventil und mit zusätzlichen Umströmungskörpern zur besseren Führung der Ventilkörper ist aus der FR-E-45.955 bekannt.

Die US-A-4,072,247 zeigt ebenfalls ein Dosiergerät ähnlicher Art, bei dem ein seitlicher Versatz zwischen der Ansaugleitung und dem Ansaugsperrventil einerseits und der Kolben-Zylinder-Anordnung der Verdrängereinheit andererseits vorliegt.

Einen Ventilblock eines Dosiergerätes der in Rede stehenden Art, bei dem das Ansaugsperrventil einerseits und das Abgabesperrventil andererseits in auswechselbaren Einsätzen angeordnet sind, zeigt die DE-A-195 36 258. Ähnliches zeigt auch die GB-A-711,879.

Die Aufgabe der Erfindung ist es, das eingangs angesprochene Dosiergerät der in Rede stehenden Art so auszugestalten, dass die Genauigkeit des abgegebenen Flüssigkeitsvolumens unabhängiger von der Bedienung wird.

Diese Aufgabe wird in drei nebengeordneten, auf demselben Grundgedanken beruhenden Varianten mit den Merkmalen der Ansprüche 1, 8 und 12 gelöst.

Die Erfindung geht von dem Grundgedanken aus, die beim abrupten Abstoppen des Kolbenhubes abzubauende Strömungsenergie des Fluids in den Leitungen nicht in die Ausstoßkanüle zu leiten. Hierzu kann die Abgabeleitung verschlossen werden (Ansprüche 1), die Energie gedämpft werden (Anspruch 8) oder überschüssiges Fluid abgeleitet werden (Anspruch 12).

In der Variante von Anspruch 1 wird verhindert, dass der beim Abbauen der Strömungsenergie entstehende Druckanstieg das federunterstützte Abgabesperrventil öffnet. Somit wird erreicht, dass kein Flüssigkeitsvolumen unbeabsichtigt und unerwartet durch die Abgabeöffnung entweicht.

Bei einer bevorzugten Ausführungsform kann der Sperrkörper durch seinen Strömungswiderstand im Fluidstrom zwischen dem Ansaugsperrventil und dem Verdrängerraum, welcher ihn um- oder durchströmt, in die jeweiligen Positionen verlagert werden.

Bei einer bevorzugten Ausführungsform kann der Sperrkörper statt dessen oder zusätzlich durch eine zugeordnete Druckfeder in die verschließende erste Positivon gedrängt werden. Im Abgabevorgang wird der Sperrkörper durch den Fluidstrom in Gegenrichtung in die zweite Position verlagert.

In einer Variante wird der Ansaugventilsitz des Ansaugsperrventils als Sperrkörper verwendet. Dieser ist dazu in einer Ventilbuchse angeordnet, die einen vorzugsweise stirnseitig angeformten Anschlag aufweist. Die Ventilbuchse weist mindestens eine in der Mantelfläche befindliche, radial ausgerichtete Bohrung auf. Diese hat die Funktion der Abgabeöffnung. Sie hat vorzugsweise an ihrem äußeren Umfang in Höhe dieser Bohrung eine umlaufende Nut. Die Bohrung bzw. die Nut steht in Fluidverbindung mit der Abgabeleitung.

Nach einem weiteren erfindungsgemäßen Lösungsvorschlag (Anspruch 8) wird die Strömungsenergie im Ansaugvorgang vor dem Ansaugsperrventil gedämpft. Hierzu ist vorzugsweise nahe diesem Ventil in der Ansaugleitung eine flexible und expandierende Wandung angeordnet, welche sich bei einem Druckanstieg verformt, um ein Flüssigkeitsvolumen aufnehmen zu können. Diese zum Bremsen der Flüssigkeitssäule aufgenommene Flüssigkeitsmenge läuft in der anschließenden Kontraktionsphase des Elementes über die Ansaugleitung wieder in den Vorratsbehälter zurück.

Bei bevorzugten Ausführungsformen kann die flexible Wandung in der Ansaugleitung als faltenbalgartiges und/oder membranartiges Element ausgeführt sein oder ein Dämpfungselement in Form einer Kolben-Zylinder-Anordnung zur Aufnahme von Druckstößen aufweisen.

Nach einem weiteren erfindungsgemäßen Lösungsvorschlag (Anspruch 12) wird ein Überdruckventil in der Ansaugleitung vorzugsweise nahe dem Ansaugsperrventil angeordnet. Hierüber wird die Strömungsenergie am Ende des Ansaugvorganges abgeleitet. Das Überdruckventil öffnet bei einem Druckanstieg, so dass die Strömungsenergie als ausströmende Flüssigkeit abgebaut wird.

Die Erfindung wird nachfolgend anhand der anliegenden Zeichnungen bevorzugter Ausführungen näher erläutern. In den Zeichnungen zeigt:
- Fig. 1a: ein Dosiergerät in Form eines Flaschendispensers entsprechend dem ersten Lösungsvorschlag im Ansaugvorgang, in Schnittdarstellung,
- Fig. 1b: das Dosiergerät aus Fig. 1a im Abgabevorgang,
- Fig. 2a: ein Dosiergerät in Form eines Flaschendispensers in einer Variante des ersten Lösungsvorschlags im Ansaugvorgangs, in Schnittdarstellung,
- Fig. 2b: das Dosiergerät aus Fig. 2a im Abgabevorgang,
- Fig. 3: ein Dosiergerät in Form eines Flaschendispensers entsprechend dem zweiten Lösungsvorschlag, in detaillierter Schnittdarstellung,
- Fig. 4: das Dosiergerät aus Fig. 3, in 90° gedrehter Schnittdarstellung,
- Fig. 5: ein Dosiergerät in Form eines Flaschendispensers entsprechend dem dritten Lösungsvorschlag, in detaillierter Schnittdarstellung.

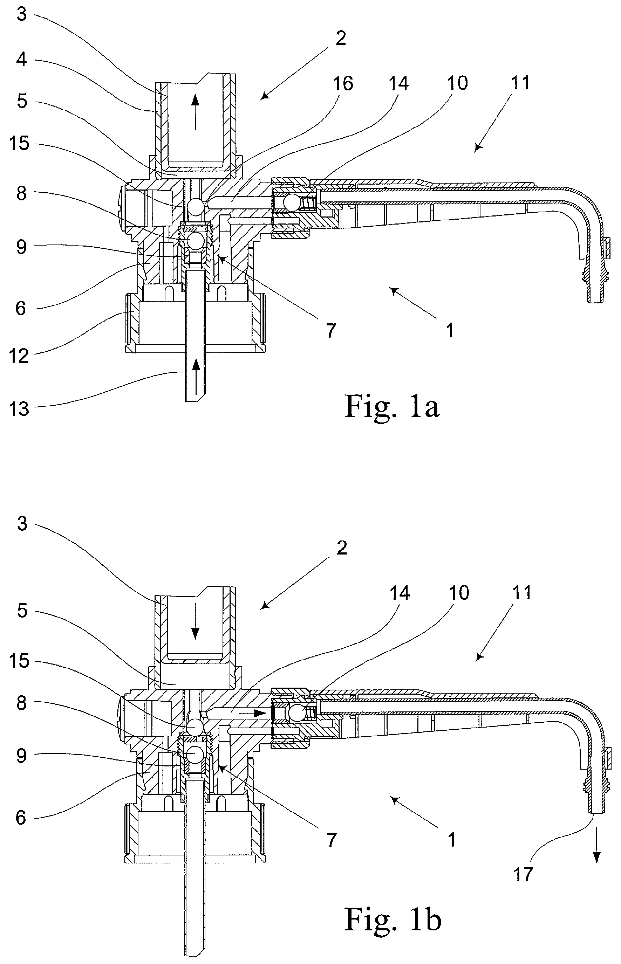

In Fig. 1a ist ein erfindungsgemäßes Dosiergerät 1 dargestellt, das ein voreingestelltes Flüssigkeitsvolumen aus einem Behälter von einer Verdrängereinheit 2 ansaugen und abgeben kann. Das Dosiergerät 1 wird über eine wechselsinnige manuelle Betätigung angetrieben, wobei neben der Betätigung per Hand auch maschinelle Antriebe denkbar sind, die keine Reduzierung der Betätigungsgeschwindigkeit vor der Anfahrt auf Anschläge vorweisen können.

Die Verdrängereinheit 2 hat einen Kolben 3, der so in einen Zylinder 4 eingepasst ist, dass der Spalt über Kapillarkräfte der Flüssigkeit abdichtet. Der Kolben 3 ist verschiebbar ausgeführt, so dass ein im Volumen veränderlicher Verdrängerraum 5 vorliegt. Nicht dargestellt sind die Betätigungseinrichtung und die Volumenverstellung an einem entsprechenden Gehäuse.

Die Verdrängereinheit 2 ist über den Zylinder 4 mit dem Ventilgehäuse 6 fest verbunden. In diesem sind Sperrventile als Ansaugsperrventil 7 mit Ansaugventilkugel 8 und Ansaugventilsitz 9 und als Abgabesperrventil 10 angeordnet, um den Flüssigkeitsstrom in Abgaberichtung zu steuern. Das Abgabesperrventil 10 kann sich auch, wie in Fig. 1a dargestellt, in der lösbar mit dem Ventilgehäuse 6 verbundenen Ausstoßkanüle 11 befinden.

Zur Befestigung des Dosiergerätes 1 an einem nicht dargestellten Behälter oder einer Befestigungskonsole ist an dem Ventilgehäuse 6 eine drehbare und unverlierbare Überwurfmutter 12 angebracht. In den Behälter ragt eine Ansaugleitung 13, die an ihrem dem Dosiergerät 1 zugewandten Ende an dem Gehäuse des Ansaugsperrventils 7 befestigt ist. Die Ansaugleitung 13 kann auch mit einer Vorratsleitung gekoppelt sein.

Die Fig. 1a zeigt das Dosiergerät 1 im Ansaugvorgang. Dabei wird der Kolben 3, wie durch den Pfeil angedeutet, im Zylinder 4 nach oben gezogen, so dass im Verdrängerraum 5 ein Unterdruck entsteht, der die zu dosierende Flüssigkeit aus der Ansaugleitung 13, wie der dortige Pfeil zeigt, ansaugt. Das Ansaugsperrventil 7 öffnet und die Flüssigkeit strömt in den Verdrängerraum 5. Der Ansaugvorgang endet mit der Anfahrt auf einen Anschlag der Volumenverstellung, so dass der Kolben 3 stoppt und der Flüssigkeitsstrom aus der Ansaugleitung 13 abrupt abgebremst wird.

Um zu verhindern, dass der Flüssigkeitsstrom in die Abgabeleitung 14 fließt, ist ein Sperrkörper 15 in der Fluidverbindung zwischen dem Verdrängerraum 5 und dem Ansaugsperrventil 7 beweglich angeordnet, der im Ansaugvorgang von dem Flüssigkeitsstrom um- und/oder durchströmt und vorzugsweise durch seinen Strömungswiderstand angetrieben wird. Alle Bewegungsrichtungen wie längs und/oder drehend sowie eine eventuell notwendige Bewegungsführung sind technisch ausführbar; wesentlich ist, dass der Sperrkörper 15 vor die Abgabeöffnung 16 der Abgabeleitung 14 verlagert wird. In dieser ersten Position verschließt der Sperrkörper 15 die Abgabeöffnung 16.

Die Verlagerungsbewegung kann auch durch eine nicht dargestellte Feder, zweckmäßigerweise eine Druckfeder, unterstützt oder bewirkt werden, wobei der Sperrkörper 15 in seine erste Position mit höherer Verschlusskraft gedrängt wird.

Der Sperrkörper 15 sinkt, bedingt durch sein Eigengewicht, vor dem Abgabevorgang von der ersten verschließenden Position in die zweite, die Abgabeleitung 14 freigebende Position, die in Fig. 1b dargestellt ist. Alternativ wird der Sperrkörper 15 beim Beginn des Abgabevorgangs - analog des Ansaugvorgangs - durch seinen Strömungswiderstand und ggf. entgegen der Kraft der Druckfeder in die zweite Position gedrängt.

Fig. 1b zeigt das Dosiergerät 1 im Abgabevorgang. Dabei wird der Kolben 3, wie durch den Pfeil angedeutet, verlagert, so dass im Verdrängerraum 5 ein Überdruck entsteht. Die Flüssigkeit strömt aus dem Verdrängerraum 5, durch die Abgabeleitung 14 in Pfeilrichtung über das - bedingt durch den Überdruck - geöffnete Abgabesperrventil 10 in die Ausstoßkanüle 11 und durch den Flüssigkeitsauslass 17 in ein, von einem weiteren Pfeil angedeutetes, jedoch nicht dargestelltes Aufnabmegefäß.

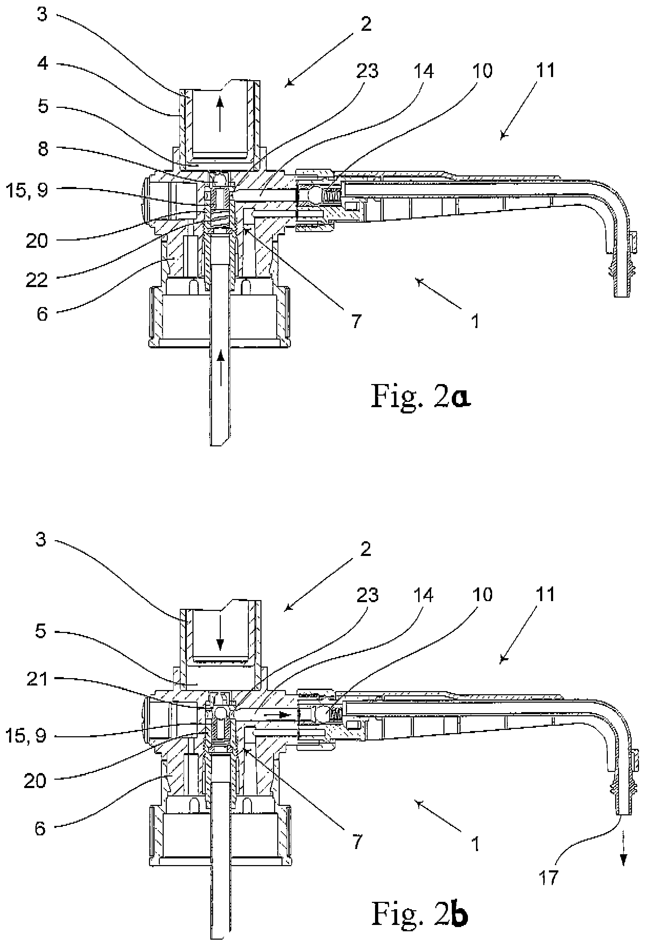

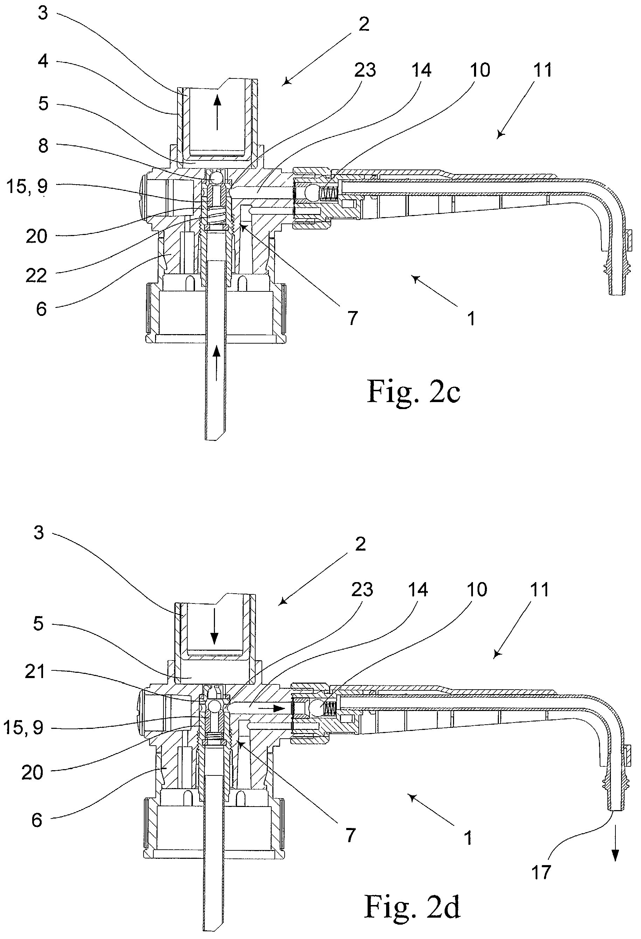

In der Variante, die in Fig. 2a und 2b gezeigt ist, ist als Sperrkörper 15 der Ansaugventilsitz 9 in einer Ventilbuchse 20, die fest mit dem Ventilgehäuse 6 verbunden ist, dichtend beweglich gelagert. An dem Ansaugventilsitz 9 ist neben dem Ventilsitz für die Ansaugventilkugel 8 ein weiterer Ventilsitz an der Außenseite eingearbeitet, der einer Dichtfläche 21 an der Ventilbuchse 20 entspricht. Diese Dichtfläche dient auch als Anschlag 21 für den Ansaugventilsitz 9, der von einer Druckfeder 22 dagegen gedrängt wird. Die Ventilbuchse 20 trägt in ihrer zylindrischen Wand radial eingearbeitete Bohrungen 23, die in eine umlaufende Nut an der Außenfläche der zylindrischen Wand münden. Diese wirken als Abgabeöffhung. Die Nut steht in Fluidverbindung mit der Abgabeleitung 14.

Im Ansaugvorgang liegt der Ansaugventilsitz 9 mit seinem weiteren Ventilsitz dichtend an der Ventilbuchse 20 an und verschließt dadurch die Abgabeleitung 14. Im Abgabevorgang kann die unter Überdruck stehende Flüssigkeit nicht durch das verschlossene Ansaugsperrventil 7 entweichen und drängt es wie ein Kolben vom Anschlag 21 weg so weit in die Ventilbuchse 20 hinein, bis die Radialbohrungen 23 freiliegen, so dass die Flüssigkeit durch diese und in der Nut zusammenlaufend in die Abgabeleitung 14 strömen kann.

In einer alternativen Ausführungsform dieser Variante übernimmt ein faltenbalgartiges Element die Funktion der Druckfeder. Der Ansaugventilsitz 9 wird an seiner Außenfläche von diesem Element gehalten, um die Funktion der Ventilbuchse - der dichtenden Bewegungsführung - ausführen zu können.

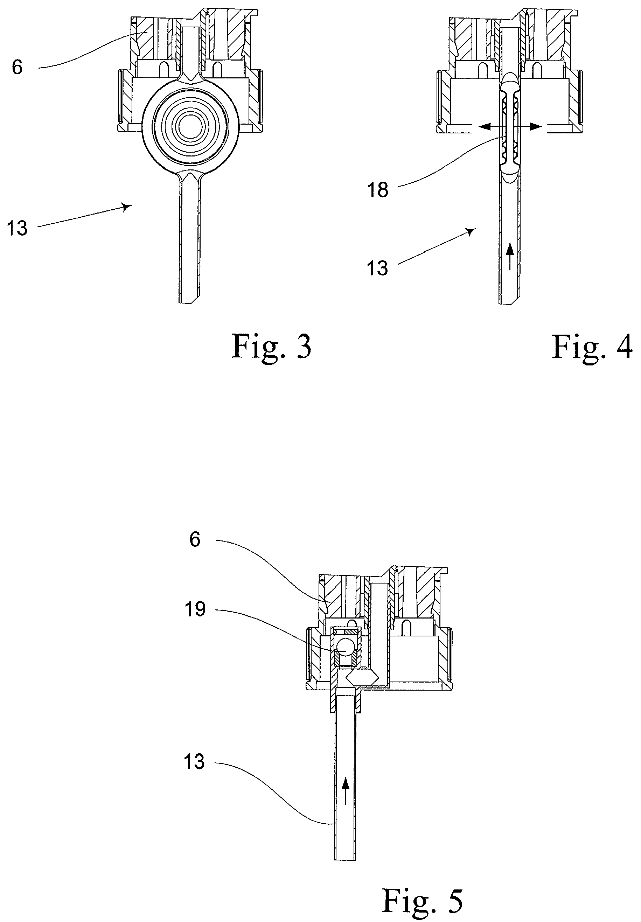

Die Fig. 3 und 4 zeigen einen weiteren Lösungsvorschlag in einer bevorzugten Variante der Ansaugleitung 13. Bei diesem Lösungsvorschlag wird die Strömungsenergie am Ende des Ansaugvorgangs vor dem Ansaugsperrventil 7 gedämpft. Hierzu ist nahe dem Ansaugsperrrventil 7 in der Ansaugleitung 13 eine flexible und expandierende Wandung angeordnet, welche sich bei einem Druckanstieg verformt, um ein Flüssigkeitsvolumen aufnehmen zu können. Diese zum Bremsen der Flüssigkeitssäule aufgenommene Flüssigkeitsmenge läuft in der anschließenden Kontraktionsphase der Wandung über die Ansaugleitung 13 wieder in den Behälter zurück.

Die flexible Wandung 18 in der Ansaugleitung 13 kann einzeln oder mehrfach und faltenbalgartig oder membranartig ausgeführt sein. In Fig. 4 sind die eingeschnürten und damit flexibleren Wandungen 18 mit den über Pfeile angedeuteten Expansionsrichtungen dargestellt. Die Ansaugleitung 13 ist im allgemeinen als Rohr aus einem thermoplastischen Kunststoff hergestellt. Dieser Kunststoff ist hervorragend geeignet, um eine solche Ansaugleitung 13 durch Warmverformung kostengünstig herzustellen.

Ebenso wie durch die flexible Wandung wird bei einem Druckanstieg ein Flüssigkeitsvolumen durch eine Dämpfungsanordnung, wie sie dem Fachmann bei Fluidleitungssystemen bekannt sind, aufgenommen.

Die Fig. 5 zeigt einen weiteren Lösungsvorschlag, bei dem die Strömungsenergie am Ende des Ansaugvorgangs vor dem Ansaugventil 7 abgeleitet wird. Hierbei ist ein Überdruckventil 19 so in der Ansaugleitung 13 angeordnet, dass die abzubremsende Flüssigkeitssäule geradlinig in das Überdruckventil 19 drängt, dieses öffnet und die Strömungsenergie in Form eines Flüssigkeitsschwalls in den Behälter zurück abgebaut wird. Vorteilhaft ist ein mit minimalem Differenzdruck öffnendes Rückschlagventil, das bedingt durch den Unterdruck in der Ansaugleitung 13 selbsttätig verschließt und sich über die Druckstöße ebenso selbsttätig entlüftet.

## Patentansprüche

1. Dosiergerät zum Abgeben eines voreingestellten Flüssigkeitsvolumens aus einem Behälter,
mit einer Verdrängereinheit (2), der vor- und nachgeschaltete Sperrventile (7; 10), nämlich ein Ansaugsperrventil (7) und ein Abgabesperrventil (10), zugeordnet sind, die den Flüssigkeitsstrom steuern und über eine Fluidverbindung verfügen, wobei durch eine wechselsinnige Betätigung der Verdrängereinheit (2) ein Flüssigkeitsvolumen in einem Ansaugvorgang aus einer Ansaugleitung (13) über das Ansaugsperrventil (7) mit einem Ansaugventilsitz (9) und die Fluidverbindung in einen Verdrängerraum (5) der Verdrängereinheit (2) ansaugbar und in einem Abgabevorgang aus dem Verdrängerraum (5) über die eine Abgabeleitung (14) aufweisende Fluidverbindung und das Abgabesperrventil (10) zu einem Flüssigkeitsauslass (17) hin abgebbar ist, wobei die Abgabeleitung (14) mit einer Abgabeöffnung (16; 23) von der Fluidverbindung zwischen dem Ansaugsperrventil (7) und dem Verdrängerraum (5) abzweigt,
**dadurch gekennzeichnet,**
**dass** in der Fluidverbindung ein Sperrkörper (15) beweglich angeordnet ist, der im Ansaugvorgang in einer ersten Position die Abgabeöffnung (16; 23) verschließt und im Abgabevorgang in einer zweiten Position die Abgabeöffnung (16; 23) freigibt.

2. Dosiergerät nach Anspruch 1, **dadurch gekennzeichnet,**
**dass** der Sperrkörper (15) in der Fluidverbindung zwischen dem Verdrängerraum (5) und dem Ansaugsperrventil (7) angeordnet ist und durch seinen Strömungswiderstand in einem Fluidstrom, welcher ihn um- oder durchströmt, verlagerbar ist.

3. Dosiergerät nach Anspruch 1 oder 2, **dadurch gekennzeichnet,**
**dass** der Sperrkörper (15) durch eine Druckfeder (22) in seine erste Position gedrängt ist.

4. Dosiergerät nach einem der Ansprüche 1 bis 3, **dadurch gekennzeichnet, dass** der Ansaugventilsitz (9) des Ansaugsperrventils (7) als Sperrkörper (15) ausgeführt und dazu frei beweglich in einer eine zylindrische Wand aufweisenden Ventilbuchse (20) angeordnet ist,
dass die Ventilbuchse (20) einen vorzugsweise stirnseitig angeformten Anschlag (21) für den Sperrkörper (15) aufweist,
dass die Ventilbuchse (20) in ihrer zylindrischen Wand als Abgabeöffnung mindestens eine radial ausgerichtete Bohrung (23) aufweist, die in Fluidverbindung mit der Abgabeleitung (14) steht,
dass im Ansaugvorgang der Sperrkörper (15) am Anschlag (21) der Ventilbuchse (20) anliegt und die Bohrung (23) verschlossen ist,
dass im Abgabevorgang das Ansaugsperrventil (7) insgesamt vom Anschlag (21) weg in die Ventilbuchse (20) hineingedrängt ist und die Bohrung (23) freiliegt,

5. Dosiergerät nach Anspruch 4, dadurch gekennzeichet,
dass die Ventilbuchse (20) in Höhe der Bohrung (23) am äußeren Umfang eine umlaufende Nut aufweist, die in Fluidverbindung mit der Abgabeleitung (14) steht.

6. Dosiergerät nach Anspruch 4 oder 5, **dadurch gekennzeichnet,**
**dass** der Sperrkörper (15) durch eine Druckfeder (22) gegen den Anschlag (21) gedrängt ist.

7. Dosiergerät nach einem der Ansprüche 1 bis 6, **dadurch gekennzeichnet,**
**dass** der Sperrkörper (15) eine Kugel ist.

8. Dosiergerät zum Abgeben eines voreingestellten Flüssigkeitsvolumens aus einem Behälter,
mit einer Verdrängereinheit (2), der vor- und nachgeschaltete Sperrventile (7; 10)), nämlich ein Ansaugsperrventil (7) und ein Abgabesperrventil (10), zugeordnet sind, die den Flüssigkeitsstrom steuern und über eine Fluidverbindung verfugen, wobei durch eine wechselsinnige Betätigung der Verdrängereinheit (2) ein Flüssigkeitsvolumen in einem Ansaugvorgang aus einer Ansaugleitung (13) über das Ansaugsperrventil (7) mit einem Ansaugventilsitz (9) und die Fluidverbindung in einen Verdrängerraum (5) der Verdrängereinheit (2) ansaugbar und in einem Abgabevorgang aus dem Verdrängerraum (5) über die eine Abgabeleitung (14) aufweisende Fluidverbindung und das Abgabesperrventil (10) zu einem Flüssigkeitsauslass (17) hin abgebbar ist,
**dadurch gekennzeichnet,**
**dass** die Ansaugleitung (13) nahe dem Ansaugsperrventil (7) eine flexible und expandierende Wandung (18) aufweist, die sich bei einem Druckanstieg in der Flüssigkeit verformt und dadurch ein zusätzliches Flüssigkeitsvolumen aufnimmt.

9. Dosiergerät nach Anspruch 8, **dadurch gekennzeichnet,**
**dass** die flexible Wandung (18) faltenbalgartig ausgeführt ist.

10. Dosiergerät nach Anspruch 8, **dadurch gekennzeichnet,**
**dass** die flexible Wandung (18) membranartig ausgeführt ist.

11. Dosiergerät nach Anspruch 8, **dadurch gekennzeichnet,**
**dass** die flexible Wandung (18) als Kolben-Zylinder-Anordnung ausgeführt ist.

12. Dosiergerät zum Abgeben eines voreingestellten Flüssigkeitsvolumens aus einem Behälter,
mit einer Verdrängereinheit (2), der vor- und nachgeschaltete Sperrventile (7; 10)), nämlich ein Ansaugsperrventil (7) und ein Abgabesperrventil (10), zugeordnet sind, die den Flüssigkeitsstrom steuern und über eine Fluidverbindung verfugen, wobei durch eine wechselsinnige Betätigung der Verdrängereinheit (2) ein Flüssigkeitsvolumen in einem Ansaugvorgang aus einer Ansaugleitung (13) über das Ansaugsperrventil (7) mit einem Ansaugventilsitz (9) und die Fluidverbindung in einen Verdrängerraum (5) der Verdrängereinheit (2) ansaugbar und in einem Abgabevorgang aus dem Verdrängerraum (5) über die eine Abgabeleitung (14) aufweisende Fluidverbindung und das Abgabesperrventil (10) zu einem Flüssigkeitsauslass (17) hin abgebbar ist,
**dadurch gekennzeichnet,**
**dass** in der Ansaugleitung (13) ein ausgangsseitig zu dem Behälter offenes Überdruckventil (19) angeordnet ist, das bei einem Druckanstieg in der Flüssigkeit öffnet und eine Flüssigkeitsmenge zurück in den Behälter strömen läßt.

13. Dosiergerät nach Anspruch 12, **dadurch gekennzeichnet,**
**dass** die Ansaugleitung (13) geradlinig in das Überdruckventil (19) mündet und versetzt am Überdruckventil (19) vorbei zum Ansaugsperrventil (7) führt.

## Claims

1. Dosing device for delivering a predefined liquid volume from a container,
with a displacement unit (2) which is assigned upstream and downstream check valves (7; 10), namely a suction check valve (7) and a delivery check valve (10), which control the flow of liquid and have a fluid connection, wherein, by means of an alternate actuation of the displacement unit (2), a liquid volume can be sucked, in a suction procedure, into a displacement chamber (5) of the displacement unit (2) from a suction line (13) via the suction check valve (7) with a suction valve seat (9) and via the fluid connection and, in a delivery procedure, can be delivered from the displacement chamber (5) to a liquid outlet (17) via the fluid connection, having a delivery line (14), and via the delivery check valve (10), wherein the delivery line (14) with a delivery opening (16; 23) branches off from the fluid connection between the suction check valve (7) and the displacement chamber (5),
**characterized in that**
a blocking body (15) is arranged movably in the fluid connection, which blocking body (15), in the suction procedure, closes the delivery opening (16; 23) in a first position and, in the delivery procedure, frees the delivery opening (16; 23) in a second position.

2. Dosing device according to Claim 1, **characterized in that**
the blocking body (15) is arranged in the fluid connection between the displacement chamber (5) and the suction check valve (7) and is movable by its flow resistance in a fluid stream that flows around it or through it.

3. Dosing device according to Claim 1 or 2,
**characterized in that** the blocking body (15) is forced into its first position by a compression spring (22).

4. Dosing device according to one of Claims 1 to 3,
**characterized in that** the suction valve seat (9) of the suction check valve (7) is designed as blocking body (15) and, for this purpose, is arranged freely movably in a valve bushing (20) having a cylindrical wall,
**in that** the valve bushing (20) has an abutment (21) for the blocking body (15), which abutment (21) is preferably formed integrally on the front face of the valve bushing (20),
**in that** the valve bushing (20) has, arranged in its cylindrical wall and serving as delivery opening, at least one radially oriented bore (23), which is fluidically connected to the delivery line (14),
**in that**, in the suction procedure, the blocking body (15) bears on the abutment (21) of the valve bushing (20) and the bore (23) is closed,
**in that**, in the delivery procedure, the suction check valve (7) as a whole is forced away from the abutment (21) into the valve bushing (20) and exposes the bore (23).

5. Dosing device according to Claim 4, **characterized in that**
the valve bushing (20), at the level of the bore (23), has a circumferential groove on the outer circumference, which circumferential groove is fluidically connected to the delivery line (14).

6. Dosing device according to Claim 4 or 5,
**characterized in that**
the blocking body (15) is forced against the abutment (21) by a compression spring (22).

7. Dosing device according to one of Claims 1 to 6,
**characterized in that**
the blocking body (15) is a ball.

8. Dosing device for delivering a predefined liquid volume from a container,
with a displacement unit (2) which is assigned upstream and downstream check valves (7; 10), namely a suction check valve (7) and a delivery check valve (10), which control the flow of liquid and have a fluid connection, wherein, by means of an alternate actuation of the displacement unit (2), a liquid volume can be sucked, in a suction procedure, into a displacement chamber (5) of the displacement unit (2) from a suction line (13) via the suction check valve (7) with a suction valve seat (9) and via the fluid connection and, in a delivery procedure, can be delivered from the displacement chamber (5) to a liquid outlet (17) via the fluid connection, having a delivery line (14), and via the delivery check valve (10),
**characterized in that**
the suction line (13), near the suction check valve (7), has a flexible and expanding wall (18) which, in the event of a pressure increase in the liquid, deforms and in this way takes up an additional liquid volume.

9. Dosing device according to Claim 8, **characterized in that**
the flexible wall (18) is designed like a bellows.

10. Dosing device according to Claim 8, **characterized in that**
the flexible wall (18) is designed like a diaphragm.

11. Dosing device according to Claim 8, **characterized in that**
the flexible wall (18) is designed as a piston/cylinder arrangement.

12. Dosing device for delivering a predefined liquid volume from a container,
with a displacement unit (2) which is assigned upstream and downstream check valves (7; 10), namely a suction check valve (7) and a delivery check valve (10), which control the flow of liquid and have a fluid connection, wherein, by means of an alternate actuation of the displacement unit (2), a liquid volume can be sucked, in a suction procedure, into a displacement chamber (5) of the displacement unit (2) from a suction line (13) via the suction check valve (7) with a suction valve seat (9) and via the fluid connection and, in a delivery procedure, can be delivered from the displacement chamber (5) to a liquid outlet (17) via the fluid connection, having a delivery line (14), and via the delivery check valve (10),
**characterized in that**
an overpressure valve (19), open towards the container on the outlet side, is arranged in the suction line (13) and, in the event of a pressure increase in the liquid, opens and allows a quantity of liquid to flow back into the container.

13. Dosing device according to Claim 12, **characterized in that**
the suction line (13) opens rectilinearly into the overpressure valve (19) and leads in an offset manner past the overpressure valve (19) to the suction check valve (7).

## Revendications

1. Appareil de dosage pour distribuer un volume de liquide préajusté provenant d'un récipient, comprenant une unité de refoulement (2), à laquelle sont associés des clapets antiretour (7 ; 10) montés en amont et en aval, à savoir un clapet antiretour d'aspiration (7) et un clapet antiretour de distribution (10), qui commandent le flux de liquide et qui disposent d'une connexion fluidique, un volume de liquide, par actionnement en sens opposés de l'unité de refoulement (2), pouvant être aspiré dans une opération d'aspiration depuis une conduite d'aspiration (13) par le biais du clapet antiretour d'aspiration (7) avec un siège de clapet d'aspiration (9) et par le biais de la connexion fluidique, dans un espace de refoulement (5) de l'unité de refoulement (2), et pouvant être distribué dans une opération de distribution depuis l'espace de refoulement (5) par le biais de la connexion fluidique présentant une conduite de distribution (14) et par le biais du clapet antiretour (10), à une sortie de liquide (17), la conduite de distribution (14) bifurquant avec une ouverture de distribution (16 ; 23) depuis la connexion fluidique entre le clapet antiretour d'aspiration (7) et l'espace de refoulement (5),
**caractérisé en ce que**
dans la connexion fluidique est disposé, de manière mobile, un corps d'arrêt (15), qui, au cours de l'opération d'aspiration, ferme l'ouverture de distribution (16 ; 23) dans une première position, et, au cours de l'opération de distribution, dans une deuxième position, libère l'ouverture de distribution (16 ; 23).

2. Appareil de dosage selon la revendication 1,
**caractérisé en ce que**
le corps d'arrêt (15) est disposé dans la connexion fluidique entre l'espace de refoulement (5) et le clapet antiretour d'aspiration (7) et peut être déplacé par sa résistance à l'écoulement dans un courant de fluide qui circule autour de lui ou à travers lui.

3. Appareil de dosage selon la revendication 1 ou 2,
**caractérisé en ce que** le corps d'arrêt (15) est repoussé dans sa première position par un ressort de compression (22).

4. Appareil de dosage selon l'une quelconque des revendications 1 à 3, **caractérisé en ce que** le siège de clapet d'aspiration (9) du clapet antiretour d'aspiration (7) est réalisé sous forme de corps d'arrêt (15) et est disposé à cet effet de manière librement déplaçable dans une douille de clapet (20) présentant une paroi cylindrique, **en ce que** la douille de clapet (20) présente une butée (21) formée de préférence du côté frontal, pour le corps d'arrêt (15), **en ce que** la douille de clapet (20) présente, dans sa paroi cylindrique, en tant qu'ouverture de distribution, au moins un alésage orienté radialement (23), qui est en liaison fluidique avec la conduite de distribution (14), **en ce qu'**au cours de l'opération d'aspiration, le corps d'arrêt (15) s'applique contre la butée (21) de la douille de clapet (20) et l'alésage (23) est fermé, et **en ce qu'**au cours de l'opération de distribution, le clapet antiretour d'aspiration (7) est enfoncé dans sa totalité à l'écart de la butée (21) dans la douille de clapet (20) et libère l'alésage (23).

5. Appareil de dosage selon la revendication 4,
**caractérisé en ce que** la douille de clapet (20) présente, à la hauteur de l'alésage (23), au niveau de la périphérie extérieure, une rainure périphérique qui est en liaison fluidique avec la conduite de distribution (14).

6. Appareil de dosage selon la revendication 4 ou 5,
**caractérisé en ce que** le corps d'arrêt (15) est repoussé par un ressort de compression (22) contre la butée (21).

7. Appareil de dosage selon l'une quelconque des revendications 1 à 6, **caractérisé en ce que** le corps d'arrêt (15) est une bille.

8. Appareil de dosage pour distribuer un volume de liquide préajusté depuis un récipient, comprenant une unité de refoulement (2), à laquelle sont associés des clapets antiretour (7 ; 10) montés en amont et en aval, à savoir un clapet antiretour d'aspiration (7) et un clapet antiretour de distribution (10), qui commandent le flux de liquide et qui disposent d'une connexion fluidique, par le biais d'un volume de liquide, par actionnement en sens opposés de l'unité de refoulement (2), pouvant être aspiré dans une opération d'aspiration depuis une conduite d'aspiration (13) par le biais du clapet antiretour d'aspiration (7) avec un siège de clapet d'aspiration (9) et par le biais de la connexion fluidique, dans un espace de refoulement (5) de l'unité de refoulement (2), et pouvant être distribué dans une opération de distribution depuis l'espace de refoulement (5) par le biais de la connexion fluidique présentant une conduite de distribution (14) et par le biais du clapet antiretour (10), à une sortie de liquide (17),
**caractérisé en ce que**
la conduite d'aspiration (13) présente à proximité du clapet antiretour d'aspiration (7) une paroi flexible et expansible (18) qui se déforme au cours d'une augmentation de la pression dans le liquide et qui reçoit ainsi un volume supplémentaire de liquide.

9. Appareil de dosage selon la revendication 8,
**caractérisé en ce que** la paroi flexible (18) est réalisée à la manière d'un soufflet.

10. Appareil de dosage selon la revendication 8,
**caractérisé en ce que** la paroi flexible (18) est réalisée à la manière d'une membrane.

11. Appareil de dosage selon la revendication 8,
**caractérisé en ce que** la paroi flexible (18) est réalisée sous forme d'agencement cylindre-piston.

12. Appareil de dosage pour distribuer un volume de liquide préajusté provenant d'un récipient, comprenant une unité de refoulement (2), à laquelle sont associés des clapets antiretour (7 ; 10) montés en amont et en aval, à savoir un clapet antiretour d'aspiration (7) et un clapet antiretour de distribution (10), qui commandent le flux de liquide et qui disposent d'une connexion fluidique, par le biais d'un volume de liquide, par actionnement en sens opposés de l'unité de refoulement (2), pouvant être aspiré dans une opération d'aspiration depuis une conduite d'aspiration (13) par le biais du clapet antiretour d'aspiration (7) avec un siège de clapet d'aspiration (9) et par le biais de la connexion fluidique, dans un espace de refoulement (5) de l'unité de refoulement (2), et pouvant être distribué dans une opération de distribution depuis l'espace de refoulement (5) par le biais de la connexion fluidique présentant une conduite de distribution (14) et par le biais du clapet antiretour (10), à une sortie de liquide (17),
**caractérisé en ce que**
dans la conduite d'aspiration (13) est disposé un clapet de surpression (19) ouvert du côté de la sortie vers le récipient, lequel s'ouvre en cas d'une augmentation de la pression dans le liquide et permet le retour d'une quantité de liquide dans le récipient.

13. Appareil de dosage selon la revendication 12,
**caractérisé en ce que** la conduite d'aspiration (13) débouche en ligne droite dans le clapet de surpression (19) et conduit de manière décalée devant le clapet de surpression (19) jusqu'au clapet antiretour d'aspiration (7).
